# FASCICULE DE BREVET EUROPEEN

(11) **EP 1 089 850 B1**
(45) Date de publication et mention de la délivrance du brevet: **15.05.2002**
(21) Numéro de dépôt: 98922568.5
(22) Date de dépôt: 09.06.1998
(51) Int. Cl.: B23Q 7/00, B23Q 7/10

(54) **DISPOSITIF DE RAVITAILLEMENT D'UNE MACHINE-OUTIL EN BARRES A USINER**
LADEVORRICHTUNG EINER WERKZEUGMASCHINE MIT ZUARBEITUNGS-STANGEN
DEVICE FOR SUPPLYING TO A MACHINE-TOOL BARS TO BE MACHINED

(43) Date de publication de la demande: 11.04.2001
(73) Titulaire: Codafi S.a.r.l., 1180 Rolle (CH)
(72) Inventeur: BORG, Per, Ch-1180 Rolle (CH); RIVERA, Francisco, CH-1260 Nyon (CH)
(74) Mandataire: Ganguillet, Cyril
(86) Numéro de dépôt international: CH9800248
(87) Numéro de publication internationale: WO9964204

(56) Documents cités:
- EP-A- 0 348 763
- DE-A- 3 233 658

## Description

La présente invention a pour objet un dispositif de ravitaillement d'une machine-outil, en particulier d'un tour automatique, en barres à usiner, comprenant un canal d'alimentation aligné sur l'axe de la machine-outil et des moyens pour introduire des barres une à une dans ce canal, comme par example divulgué dans le document DE-A-32 33 658.

Dans le domaine de l'alimentation des machines-outils et en particulier des tours automatiques travaillant sur de la matière première en barres on connaît déjà de nombreux types de ravitailleurs qui permettent d'allonger la période d'autonomie de la machine. Cependant pour les tours ou autres centres d'usinage qui travaillent sur des barres de petits diamètres, en particulier sur des barres dont le diamètre est inférieur à 1 cm, les ravitailleurs connus ne donnent pas satisfaction.

Le but de la présente invention est donc de créer un ravitailleur permettant de stocker un grand nombre de barres et fonctionnant de manière entièrement fiable, même dans le cas où les barres sont de petit diamètre.

Dans ce but le dispositif selon l'invention concerne un dispositif de ravitaillement d'une machine-outil, en particulier d'un tour automatique, en barres à usiner, comprenant un canal d'alimentation aligné sur l'axe de la machine-outil et des moyens pour introduire des barres une à une dans ce canal, les dits moyens comprenant
- un bac fixe apte à contenir une réserve de barres empilées en vrac dans le sens longitudinal, présentant un bord longitudinal supérieur rectiligne,
- un réceptacle adjacent au dit bord supérieur du bac et s'étendant au-dessus du canal d'alimentation,
- au moins un mécanisme de saisie à action répétitive, disposé de manière à saisir dans le bac au moins une portion d'une barre et à la tirer jusque dans une position déterminée située au-dessus du réceptacle,
- au moins un mécanisme d'alignement comportant au moins un organe qui se déplace dans le sens longitudinal et retire progressivement du bac l'ensemble de la barre saisie par le mécanisme de saisie, de façon à placer l'ensemble de la barre dans le réceptacle, et
- des moyens de commande qui provoquent la dessaisie de la barre et sa chute dans le fond du réceptacle puis dans le canal d'alimentation.

D'autres caractéristiques du dispositif selon l'invention sont définies dans les revendications subordonnées à la revendication 1.

On décrit ci-après, à titre d'exemple, une forme d'exécution de l'objet de l'invention en se référant au dessin annexé dans lequel:
la figure 1 est une vue générale en plan de dessus de l'ensemble du dispositif, le couvercle du mécanisme de saisie étant enlevé,
la figure 2 est une vue en coupe selon la ligne 2-2 de la figure 1 montrant le bâti du mécanisme de saisie,
la figure 3 est une vue en élévation partiellement coupée montrant le bâti du mécanisme de saisie vu de profil,
la figure 4 est une vue en élévation frontale du bâti du mécanisme de saisie,
les figures 5, 6 et 7 sont des vues: en coupe selon la ligne 5-5 de la figure 1, en élévation longitudinale et en plan de dessus montrant le mécanisme d'alignement,
la figure 8 est une vue en coupe selon la ligne 8-8 de la figure 1 montrant la pince auxiliaire, et
la figure 9 est une vue en coupe selon la ligne 9-9 de la figure 1 montrant le mécanisme d'éjection des bouts de barres.

Comme on le sait la difficulté principale que l'on rencontre avec les barres de petit diamètre provient de leur grande flexibilité résultant du grand rapport entre la longueur et le diamètre. En effet il est impératif de pouvoir alimenter le tour, ou autre machine-outil, en barres dont la longueur est du même ordre que pour les diamètres moyens et grands, soit de l'ordre de 3 à 4 m. La grande flexibilité qui en résulte est cause de problèmes non seulement pour le transfert des barres du bac dans le canal d'alimentation mais aussi pour leur engagement correct dans les organes de commande de la machine-outil.

Le dispositif décrit ci-après résout ces problèmes.

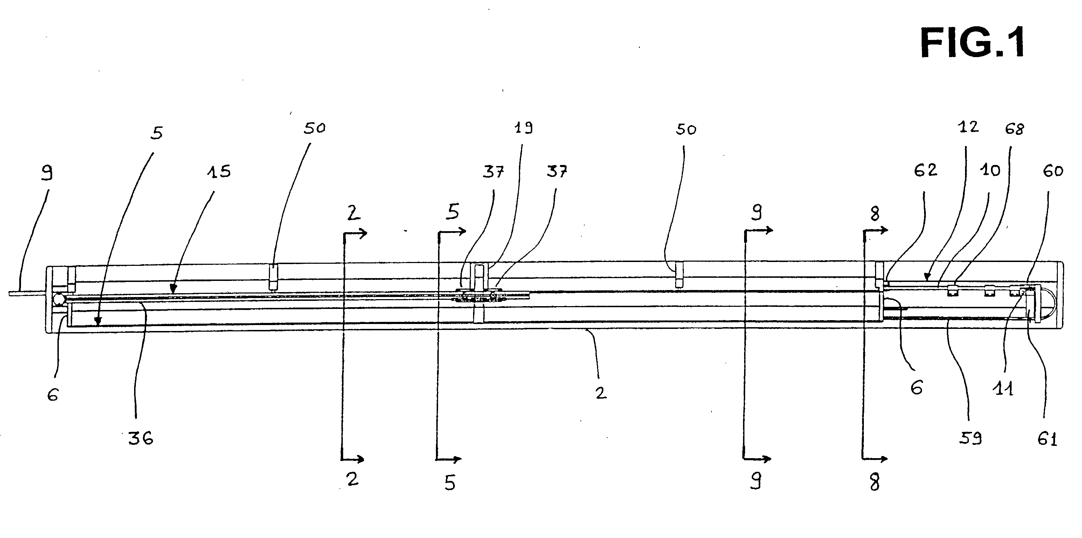

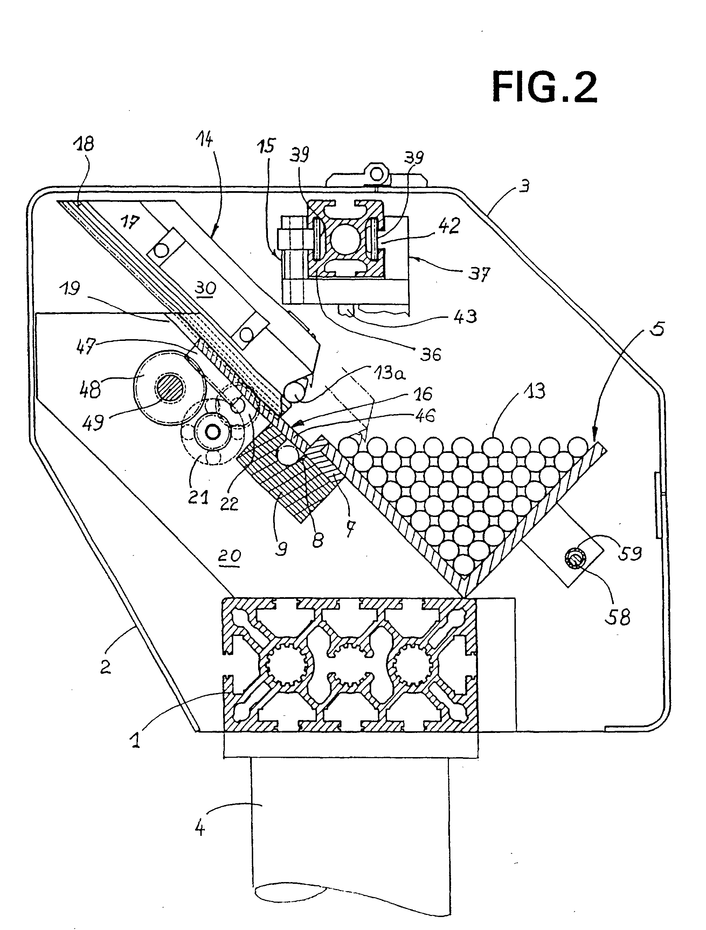

Sa disposition générale est visible aux figures 1 et 2.

Les éléments principaux de la structure sont un profilé d'armature 1 (figure 2) qui supporte un carénage général 2 avec un couvercle ouvrant 3 et qui est porté lui-même par des montants 4. A l'intérieur du carénage 2 est monté un bac 5 en forme de V disposé horizontalement et limité par deux plaques d'extrémité 6. Le flanc gauche, à la figure 2, du bac 5 est équipé d'une étroite pièce rapportée 7 qui forme le bord longitudinal supérieur du bac et s'étend en droite ligne horizontalement sur toute sa longueur.

Le canal d'alimentation proprement dit est une gorge en U 8 ménagée dans un conduit 9. Celui-ci est fixé directement sous le bord 7. La gorge 8 est normalement recouverte par un réceptacle 16, organe qui sera décrit plus loin.

L'extrémité du conduit 9 est visible à gauche de la figure 1. Elle se raccorde à la machine qui doit être alimentée. A son extrémité droite à la figure 1, le conduit 9 est prolongé par un guide tubulaire rigide 10 qui comporte à son extrémité droite un socle 11 monté pivotant autour d'un axe vertical. Ces éléments font partie d'un mécanisme d'entraînement désigné par 12, qui sera décrit plus en détails plus loin.

Des barres à usiner 13 (figure 2) sont amoncelées en vrac mais dans une disposition parallèle dans le bac 5. Un mécanisme de saisie 14 est agencé de manière à saisir une barre 13 et une seule, par sa partie médiane, et à retirer cette partie médiane jusqu'au dessus du bord 7 tandis qu'un mécanisme d'alignement 15 soulève la barre saisie par le mécanisme 14 progressivement et de proche en proche du centre vers les deux extrémités, après quoi la partie médiane de la barre est libérée et l'ensemble de la barre tombe sur le réceptacle 16 qui est alors déplacé obliquement vers le haut, découvrant le canal 8 dans lequel la barre 13 tombe. Le mécanisme 12 de même que d'autres mécanismes auxiliaires qui seront décrits plus loin peuvent alors intervenir et assurer l'engagement de la barre 13 dans les organes de commande du tour, son avance progressive au fur et à mesure de l'usinage et finalement le retrait du bout de barre non usinable vers l'arrière, sa libération et son éjection.

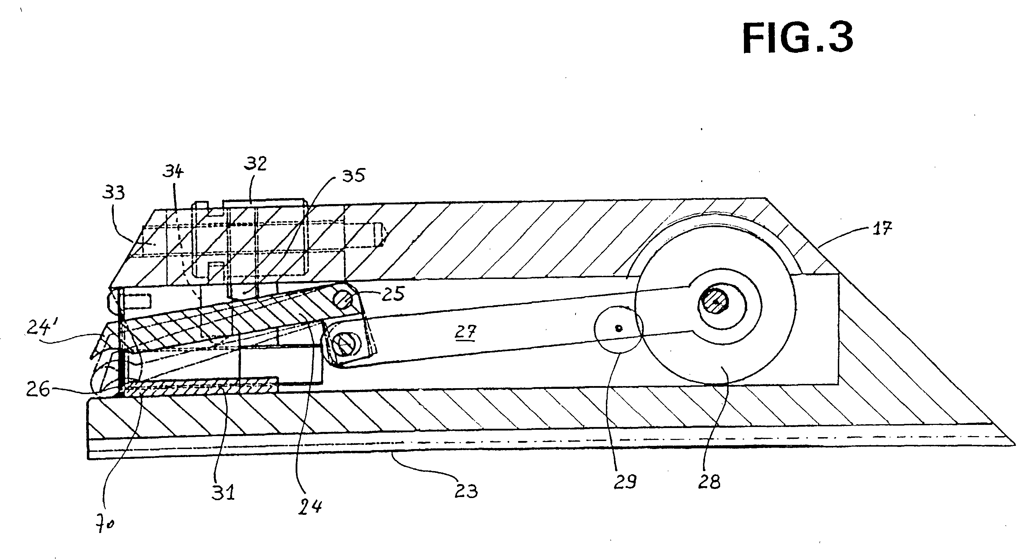

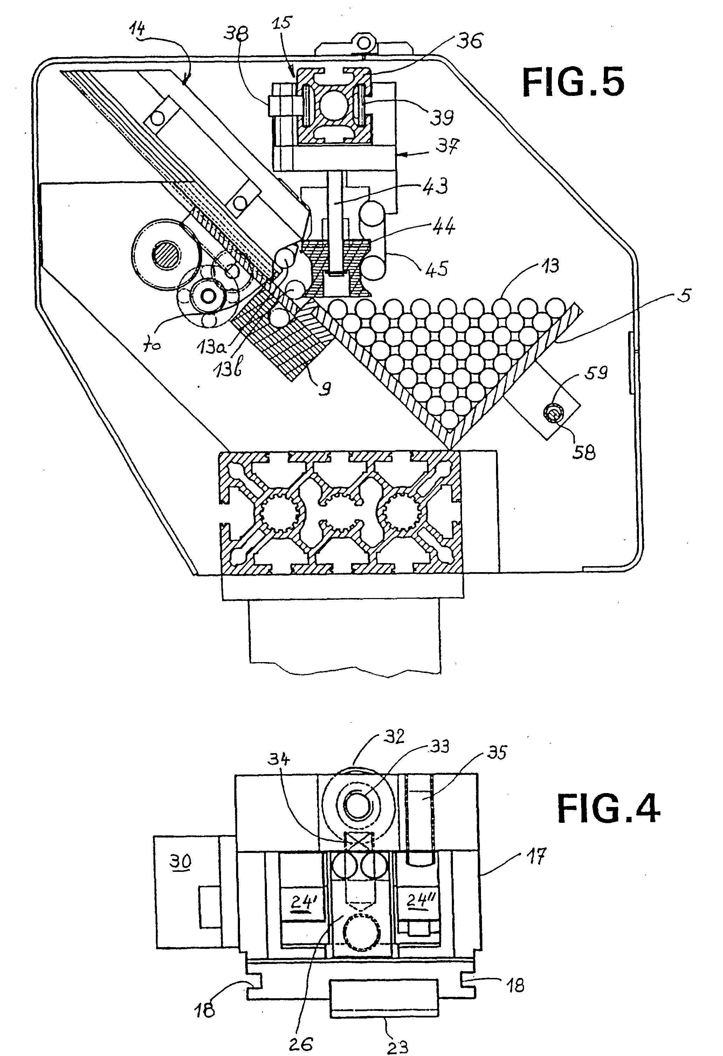

On décrira maintenant en se référant aux figures 2, 3 et 4 la construction du mécanisme de saisie 14. Ce mécanisme se compose d'un bloc mobile 17 présentant dans ses faces latérales des coulisseaux de guidage 18 qui sont montés sur des rails solidaires d'un pont transversal oblique 19 (figure 1) fixé à l'armature 1 du dispositif, au milieu de sa longueur. Comme on le voit à la figure 2 un moteur 21 fixé par des vis sur une entretoise 20 de l'armature 1 entraîne un pignon 22 engagé dans une crémaillère 23 (figures 3 et 4) pour déplacer le bloc mobile 17 en va-et-vient sur le pont 19. La figure 2 montre la position de repos et, en traits mixtes, une position de travail de ce bloc. Afin de saisir de manière sure une barre et une seule à chaque mouvement d'avance, le bloc mobile comporte divers agencements dont les plus importants sont les deux parties d'extrémité 24' et 24" d'un mors 24 (figures 3 et 4) qui pivote sur un axe transversal horizontal 25, et une lame élastique 26 fixée le long de son bord supérieur par deux vis perpendiculairement à la direction de va-et-vient du bloc 17. Le mors 24 est pourvu d'un talon à son extrémité arrière et ce talon est articulé sur une biellette 27 reliée par une articulation à excentrique à un pignon 28 qui engrène dans un pignon 29 calé sur l'arbre de sortie d'un moteur 30. Les figures 2 et 3 montrent clairement comment le mors 24 est commandé en fonction du mouvement d'avance du bloc mobile 17 de manière à accrocher une barre de l'empilement présent dans le bac 5 entre ses deux parties d'extrémité 24' et 24" et une languette inférieure 70. La lame élastique 26 sert à contrôler, en coopérant avec un détecteur de proximité 31, qu'une barre et une seule a été saisie. Une bobine 32 montée sur un axe central 33, une goupille guidée 34 et une vis de réglage 35 permettent d'ajuster exactement les organes du mécanisme en fonction du diamètre des barres 13. Un programme de commande contrôlé par les détecteurs décrits assure que si le mouvement de va-et-vient du bloc mobile 17 n'a pas produit la saisie d'une barre par sa partie médiane, le mouvement est répété autant de fois que nécessaire. On peut prévoir en outre qu'après un certain nombre de mouvements restés inefficaces, la machine s'arrête et une alarme est déclenchée.

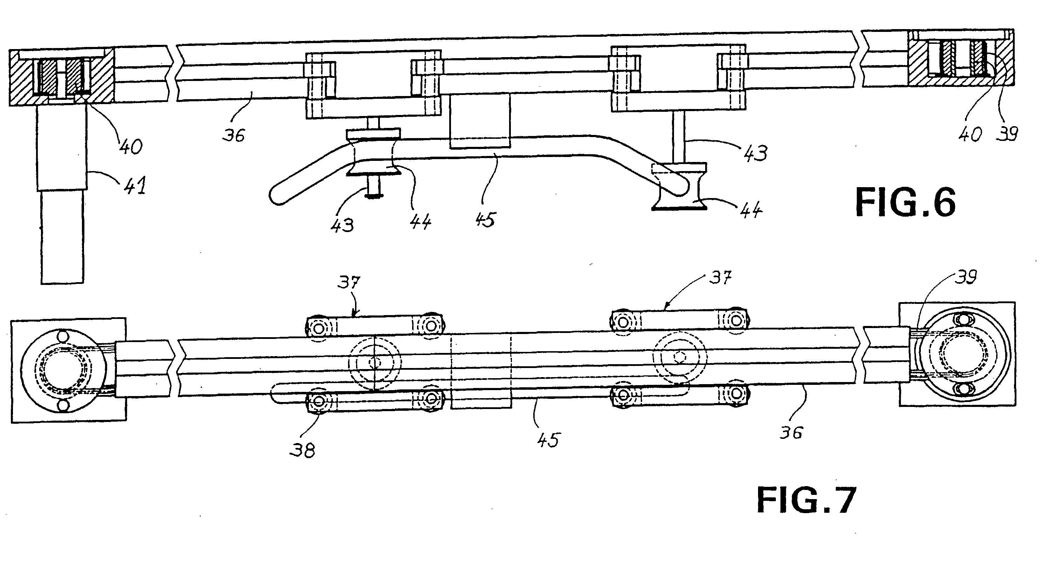

Revenant à la figure 2 on voit en 13a la partie médiane de la barre qui a été saisie. Le mécanisme d'alignement 15, qui entre alors en action, est représenté partiellement à la figure 1, en coupe à la figure 5 et en élévation et en plan aux figures 6 et 7. Il comporte un profilé longitudinal 36 fixé par ses deux extrémités aux faces frontales de l'armature 1, supportées elles-mêmes par le profilé 1. Deux chariots 37 supportés et guidés par des roulettes 38 peuvent voyager le long du profilé 36. Comme on le voit aux figures 5 à 7, les chariots 37 sont entraînés par une courroie sans fin 39 qui tourne sur des poulies 40 montées aux deux extrémités du profilé 36 et dont celle qui est située à l'extrémité gauche aux figures 6 et 7 est accouplée à un moteur 41. Le profilé 36 présente notamment deux gorges longitudinales opposées dans lesquelles passent d'une part les deux brins de la courroie 39 et d'autre part les roulettes 38. Les bâtis des chariots 37 comportent quatre axes fixes portant les roulettes 38, un fond et deux parois latérales dont les extrémités supérieures relient les axes des roulettes 38 et dont les parties centrales comportent d'un côté une nervure 42 contre laquelle le brin correspondant de la courroie 39 est fixé par un rivet. Ainsi, quand le moteur 41 tourne dans un sens, les chariots se déplacent en s'écartant tandis qu'ils se rapprochent si le moteur tourne dans l'autre sens. La figure 1 montre les chariots 37 dans leur position rapprochée, de part et d'autre du support central 19 du mécanisme de saisie.

Le fond de chacun des chariots 37 porte une tige cylindrique verticale 43 qui s'étend vers le bas et sur laquelle coulisse un galet 44 de forme cylindrique concave dont le flanc coopère avec une rampe de courte longueur désignée par 45 aux figures 5, 6, 7. Le fonctionnement du dispositif d'alignement résulte clairement de ces figures. Bien que la figure 6 montre les chariots 37 dans des positions dissymétriques, afin de faire apparaître les positions extrêmes des galets 44 en hauteur, ces deux chariots se trouvent en fait toujours à la même distance de la partie médiane du châssis. Lorsque le mécanisme de saisie 14 agit, ils se trouvent dans des positions rapprochées et les galets 44 sont maintenus par la rampe 45 en position supérieure, c'est-à-dire dans la position en traits mixtes à la figure 5. Le mécanisme de saisie a donc le champ libre pour soulever la partie centrale d'une barre et l'amener dans la position 13a de la figure 2 (également repérée à la figure 5). En se déplaçant vers les extrémités les chariots permettent aux galets de glisser sur les parties descendantes de la rampe 45 de sorte que le rebord inférieur de chaque galet accroche une partie intermédiaire de la barre encore reposant sur l'amas des barres dans le bac 5 et la soulève pour l'amener dans la position 13b à la figure 5. On comprend que lorsque le déplacement des chariots est terminé et que les mors 24 ont relâché la barre, celle-ci est alors allongée dans une position rectiligne sur le réceptacle 16.

Le réceptacle 16 s'étend sur toute la longueur du dispositif et recouvre la gorge 8 qui constitue le canal d'alimentation. Il est visible aux figures 1, 2, 5, 8 et 9. En fait il est subdivisé en quatre segments comportant chacun une plaque étroite 46 portant sur sa face inférieure deux crémaillères 47 parallèles engrenant dans des pignons 48, les huit pignons 48 étant calés sur un même axe 49 accouplé à un moteur unique (non représenté). Ce moteur permet de déplacer l'ensemble du réceptacle obliquement vers le haut d'un mouvement de translation régulier de telle sorte que la barre 13 reposant sur les éléments 46 est retenue par les butées que forment les cloisons intercalaires 50 (figure 1). Elle est donc recueillie dans le canal 8.

Il reste à décrire les organes auxiliaires qui interviennent alors pour relier la barre aux organes du tour de manière à assurer son usinage.

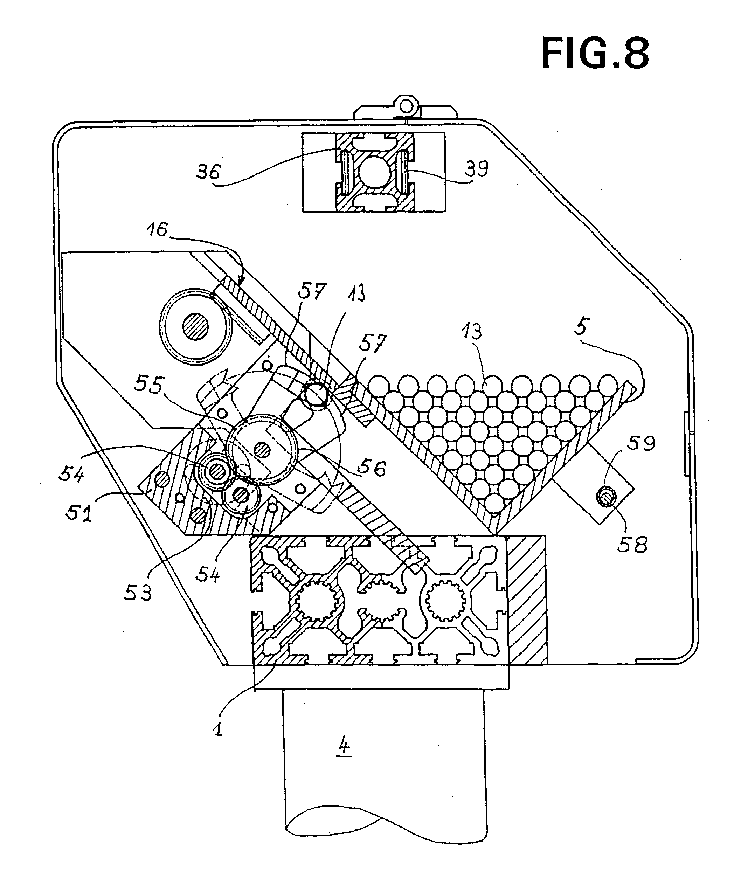

La figure 8 montre la pince auxiliaire à centrage automatique disposée comme on le voit à la figure 1 au voisinage de l'extrémité droite du bac et du réceptacle. A cet endroit le conduit 9 est interrompu et un bloc fixe 51 fixé à une traverse porte un moteur 53 entraînant deux pignons de même diamètre 54 dont chacun engrène dans un secteur denté 55, 56 solidaire d'une griffe de pince 57. Les deux secteurs dentés 55, 56 sont coaxiaux, tournent en sens opposés et effectuent environ un quart de tour à chaque entraînement. A la figure 8 les ciseaux sont représentés en traits pleins en position fermée. Ils enserrent l'extrémité arrière de la barre 13 et la maintiennent dans une position exactement centrée par rapport au canal d'alimentation 8, quel que soit le diamètre de cette barre. En traits mixtes, on voit la position d'ouverture de la pince 57.

Lorsqu'une barre 13 est parvenue dans le canal 8 comme décrit précédemment, la pince 57 se ferme une première fois, ce qui permet d'effectuer la dernière opération nécessaire pour amener la barre dans la position d'usinage. Les organes qui interviennent alors sont représentés à l'extrémité droite de la figure 1. Le mécanisme d'entraînement 12 comporte en effet un organe pousse-barre constitué d'un câble flexible 58 cranté dans sa longueur, qui s'étend parallèlement au bac 5 dans un guide tubulaire 59, effectue dans ce guide un arc de cercle de 180 degrés puis passe sur un pignon 60 actionné par un moteur 61 (figure 1). Le pousse-barre 58 est visible notamment aux figures 2, 5, 8 et 9. A l'extrémité droite du dispositif, il traverse le guide rigide 10 et se termine, dans sa position reculée extrême, en retrait de la pince auxiliaire 57. Il porte à son extrémité de façon connue en soi un embout rotatif muni d'une pince de barre adaptée au calibre de la barre 13. Comme indiqué au début, le guide 10 est monté pivotant autour de l'axe du socle 11 et, dans sa position normale, il est fixé par un raccord à vis 62 à l'extrémité arrière du conduit 9. Cependant il peut être déplacé latéralement après dévissage du raccord 62, ce qui donne accès à la pince de barre incorporée à l'embout rotatif. Celle-ci est interchangeable et peut donc être adaptée avec précision au diamètre des barres.

Lorsqu'une barre 13 a été introduite dans le canal 8 comme décrit plus haut et que la pince auxiliaire 57 l'a bloquée, le moteur 61 est mis en marche de manière à déplacer le câble pousse-barre vers la gauche dans le guide 10 et engager la pince sur la barre. Ensuite la pince 57 est ouverte et le moteur 62 peut conduire progressivement la barre vers la gauche au fur et à mesure de l'usinage.

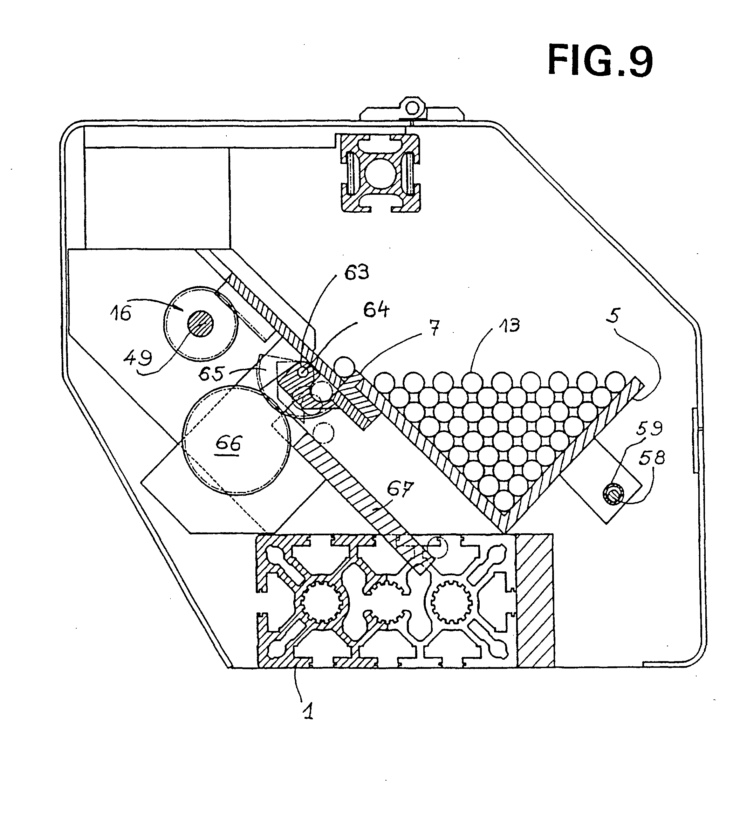

Lorsque l'usinage d'une barre est terminé, le moteur 62 est commandé en marche arrière. Le bout de barre restant est rappelé jusque dans l'extrémité droite du canal 8 et la pince 57 se ferme à nouveau sur lui. Les figures 8 et 9 de même que leurs emplacements de coupe notés à la figure 1 montrent qu'un segment extrême du conduit 9 d'une longueur d'environ 40 cm est conformé différemment de ce qui est représenté aux figures 2 et 5. Au lieu que le canal 8 soit pratiqué dans une barre fixe de profil rectangulaire, comme le conduit 9, il est ménagé dans un segment de barreau 63 qui pivote autour d'un axe longitudinal 64 solidaire d'un secteur denté 65 qui engrène dans un pignon 66 entraîné par un moteur (non représenté). Une plaque d'éjection 67 est disposée sous le profilé pivotant 63. Après que la pince 57 s'est refermée sur le bout de barre, que le pousse barre 58 s'est déplacé vers la droite pour extraire la pince de barre, son déplacement étant contrôlé par trois détecteurs successifs 68, et que la pince 57 s'est ouverte à nouveau, le profilé pivotant 63 bascule et le bout de barre est évacué par gravité à travers une ouverture dans le profilé 1. Il tombe dans un bac.

On a indiqué pour la longueur du profilé 63 une valeur de l'ordre de 40 cm, qui correspond en pratique à la longueur maximale que les bouts de barres peuvent présenter, mais il est évident qu'en général ces restes de barre non usinables sont plus courts. Dans ce cas le fonctionnement des éléments décrits est exactement le même.

De même, le mécanisme de saisie, agencé de façon à saisir la barre dans sa partie médiane dans le dispositif qui est décrit ci-dessus, peut également être disposé de façon à saisir la barre à l'une ou l'autre de ses extrémités, ou en tout autre endroit le long de la barre, le dispositif d'alignement 15 de la barre pouvant être remplacé par tout organe adéquat, par exemple un doigt d'accrochage, que l'on déplace dans le sens longitudinal. Dans une variante, deux dispositifs de saisie peuvent être prévus, par exemple de façon à saisir la barre à chacune de ses extrémités.

## Revendications

1. Dispositif de ravitaillement d'une machine-outil, en particulier d'un tour automatique, en barres à usiner, comprenant un canal d'alimentation aligné sur l'axe de la machine-outil et des moyens pour introduire des barres une à une dans ce canal, **caractérisé en ce que** les dits moyens comprennent
- un bac fixe (5) apte à contenir une réserve de barres (13) empilées en vrac dans le sens longitudinal, présentant un bord (7) longitudinal supérieur rectiligne,
- un réceptacle (16) adjacent au dit bord supérieur du bac et s'étendant au-dessus du canal d'alimentation (8),
- au moins un mécanisme de saisie (14) à action répétitive, disposé de manière à saisir dans le bac au moins une portion d'une barre et à la tirer jusque dans une position déterminée située au-dessus du réceptacle,
- au moins un mécanisme d'alignement (15) comportant au moins un organe (44) qui se déplace dans le sens longitudinal et retire progressivement du bac l'ensemble de la barre saisie par le mécanisme de saisie, de façon à placer l'ensemble de la barre dans le réceptacle, et
- des moyens de commande qui provoquent la dessaisie de la barre et sa chute dans le fond du réceptacle puis dans le canal d'alimentation.

2. Dispositif selon la revendication 1, **caractérisé en ce que** les moyens de commande sont agencés de manière à provoquer un déplacement du réceptacle (16) qui fait tomber la barre reçue sur le réceptacle, de ce dernier dans le canal d'alimentation (8).

3. Dispositif selon l'une des revendications 1 ou 2, **caractérisé en ce qu'**il comporte en outre des moyens (12, 63-67) de fixation et de déplacement axial, à commande contrôlée, pour relier chaque barre (13) introduite dans le canal d'alimentation (8) aux organes de commande du tour, puis retirer et éjecter hors du canal le bout de barre restant après usinage.

4. Dispositif selon la revendication 1, **caractérisé en ce que** le dit bord (7) longitudinal supérieur du bac (5) est le bord supérieur horizontal d'une plaque plane placée obliquement et formant une paroi latérale du bac.

5. Dispositif selon la revendication 1, **caractérisé en ce que** le mécanisme de saisie (14) comporte un bâti rigide, mobile perpendiculairement au bac (5) au milieu de celui-ci, et commandé de façon à effectuer au moins un mouvement de va-et-vient par rapport au bac à chaque saisie d'une barre (13).

6. Dispositif selon la revendication 5, **caractérisé en ce que** le mécanisme de saisie (14) comporte, montés dans son bâti, deux parties d'extrémité parallèle (24', 24") d'un mors (24), une lame (26) d'appui élastique placée entre lesdites parties d'extrémité du mors, et des moyens moteurs (30) pour imprimer au mors un mouvement d'accrochage coordonné avec le mouvement d'avance du bâti.

7. Dispositif selon la revendication 6, **caractérisé en ce que** des moyens de contrôle sont associés au mécanisme de saisie (14) et pourvus de détecteurs (31) de façon à provoquer une répétition du mouvement de saisie et du mouvement d'alignement si lors d'un premier mouvement de saisie aucune barre n'a été accrochée entre les mors (24) et ladite lame élastique (26).

8. Dispositif selon l'une quelconque des revendications précédentes, **caractérisé en ce que** le mécanisme d'alignement (15) comporte une paire de chariots (37) guidés et supportés par un rail profilé (36) disposé au dessus du bac (5) et portant chacun une tige verticale (43) sur laquelle coulisse un galet profilé (44), ces galets étant déplacés verticalement sur les dites tiges par une rampe fixe (45) en fonction de l'éloignement mutuel des chariots (37) au cours de leur déplacement de manière à réaliser l'alignement de la barrel (13).

9. Dispositif selon la revendication 2, **caractérisé en ce que** les dits moyens pour faire tomber une barre (13) dans le canal d'alimentation (8) consistent **en ce que** le réceptacle (16) est constitué d'une série de plaques allongées (46) supportées et guidées dans le prolongement l'une de l'autre, solidaires de crémaillères (47) dans lesquelles engrènent des pignons (48) calés sur un même arbre (49) commandé par un moteur, ce dernier entraînant un déplacement latéral de l'ensemble des dites plaques (46) pour provoquer la chute de la barre.

10. Dispositif selon la revendication 3, **caractérisé en ce que** les dits moyens (12) de fixation et de déplacement axial comportent une pince de barre (57) montée sur un embout rotatif à une extrémité d'un câble (58) entraîné dans le sens de son axe de manière à avancer puis reculer dans le canal d'alimentation (8), l'avance et le recul de ce câble étant coordonnés avec la commande du tour.

11. Dispositif selon la revendication 10, **caractérisé en ce que** la pince de barre (57) montée sur l'embout rotatif est échangeable pour permettre son adaptation au diamètre des barres à charger.

12. Dispositif selon la revendication 3, **caractérisé en ce que** les dits moyens (63-67) pour éjecter les bouts de barres en fin d'usinage consistent **en ce qu'**une portion arrière du canal d'alimentation (8), de longueur supérieure au bout de barre maximum possible, est agencée de manière à pouvoir basculer autour d'un axe parallèle à l'axe du canal.

13. Dispositif selon les revendications 11 et 12, **caractérisé en ce que** le canal d'alimentation (8) est équipé d'une pince auxiliaire (57) à commande programmée, capable de fixer, dans une position exactement centrée par rapport au canal (8), une partie de barre située dans le canal, cette pince auxiliaire (57) servant à fixer l'arrière d'une barre entière au moment de l'engagement de la pince de barre et à fixer l'arrière d'un bout de barre en fin d'usinage pour permettre d'en retirer la pince de barre avant l'éjection.

## Patentansprüche

1. Vorrichtung zur Beschickung einer Werkzeugmaschine, insbesondere einer Automatendrehmaschine, mit zu bearbeitenden Stangen, umfassend einen Beschickungskanal, der auf die Achse der Werkzeugmaschine ausgerichtet ist, und Mittel, um Stangen eine nach der anderen in diesen Kanal einzuführen, **dadurch gekennzeichnet, dass** die genannten Mittel umfassen:
- einen fixen Kasten (5), der geeignet ist, einen Vorrat an Stangen (13) aufzunehmen, die lose in Längsrichtung aufeinandergestapelt sind, und der einen geradlinigen oberen Längsrand (7) aufweist,
- einen Behälter (16), der an den genannten oberen Rand des Kastens anschließt und sich über dem Beschickungskanal (8) erstreckt,
- mindestens einen Greifmechanismus (14) mit sich wiederholender Tätigkeit, der so angeordnet ist, dass er im Kasten mindestens einen Teil einer Stange ergreift und sie bis zu einer bestimmten Position zieht, die sich über dem Behälter befindet,
- mindestens einen Ausrichtemechanismus (15), umfassend mindestens ein Organ (44), das sich in Längsrichtung bewegt und allmählich die gesamte Stange aus dem Kasten zieht, die von dem Greifmechanismus ergriffen wurde, um die gesamte Stange im Behälter unterzubringen, und
- Steuerungsmittel, die das Loslassen der Stange und ihren Fall auf den Boden des Behälters und sodann in den Beschickungskanal hervorrufen.

2. Vorrichtung nach Anspruch 1, **dadurch gekennzeichnet, dass** die Steuerungsmittel so gestaltet sind, dass sie eine Bewegung des Behälters (16) hervorrufen, die bewirkt, dass die im Behälter aufgenommene Stange von dem letztgenannten in den Beschickungskanal (8) fällt.

3. Vorrichtung nach einem der Ansprüche 1 oder 2, **dadurch gekennzeichnet, dass** sie darüber hinaus Mittel (12, 63-67) zur Befestigung und zur axialen Bewegung mit kontrollierter Steuerung umfasst, um jede in den Beschickungskanal (8) eingeführte Stange (13) mit den Steuerorganen der Automatendrehmaschine zu verbinden und sodann das verbleibende Stangenende nach der Bearbeitung aus dem Kanal zu ziehen und auszustoßen.

4. Vorrichtung nach Anspruch 1, **dadurch gekennzeichnet, dass** der genannte obere Längsrand (7) des Kastens (5) der horizontale obere Rand einer ebenen Platte ist, die schräg angebracht ist und eine Seitenwand des Kastens bildet.

5. Vorrichtung nach Anspruch 1, **dadurch gekennzeichnet, dass** der Greifmechanismus (14) einen starren Rahmen umfasst, der senkrecht zum Kasten (5) in der Mitte des letztgenannten beweglich ist und der so gesteuert ist, dass er bei jedem Ergreifen einer Stange (13) mindestens eine hin- und zurückgehende Bewegung in Bezug auf den Kasten ausführt.

6. Vorrichtung nach Anspruch 5, **dadurch gekennzeichnet, dass** der Greifmechanismus (14) in seinem Rahmen montiert umfasst: zwei parallele Endteile (24', 24") einer Spannbacke (24), ein zwischen den genannten Endteilen der Spannbacke angeordnetes Blatt (26) zur elastischen Halterung und Antriebsmittel (30), um die Backe zu einer Erfassungsbewegung zu veranlassen, die mit der Vorschubbewegung des Rahmens koordiniert ist.

7. Vorrichtung nach Anspruch 6, **dadurch gekennzeichnet, dass** Kontrollmittel mit dem Greifmechanismus (14) verbunden sind und mit Detektoren (31) versehen sind, um eine Wiederholung der Greifbewegung und der Ausrichtebewegung hervorzurufen, wenn bei einer ersten Greifbewegung keine Stange zwischen den Spannbacken (24) und dem genannten elastischen Blatt (26) erfasst wurde.

8. Vorrichtung nach einem der vorhergehenden Ansprüche, **dadurch gekennzeichnet, dass** der Ausrichtemechanismus (15) ein Paar Schlitten (37) umfasst, die von einer über dem Kasten (5) angeordneten, mit einem Profil versehenen Schiene (36) geführt und getragen werden und jeweils einen vertikalen Stab (43) tragen, auf dem eine mit einem Profil versehene Rolle (44) gleitet, wobei diese Rollen in Abhängigkeit von der gegenseitigen Entfernung der Schlitten (37) im Lauf ihrer Bewegung durch eine fixe Rampe (45) vertikal auf den genannten Stäben bewegt werden, so dass die Ausrichtung der Stange (13) ausgeführt wird.

9. Vorrichtung nach Anspruch 2, **dadurch gekennzeichnet, dass** die genannten Mittel, die bewirken, dass eine Stange (13) in den Beschickungskanal (8) fällt, darin bestehen, dass der Behälter (16) aus einer Reihe von länglichen Platten (46) gebildet ist, die jeweils in der Verlängerung der anderen getragen und geführt werden und die fest mit Zahnstangen (47) verbunden sind, in die Ritzel (48) eingreifen, die auf einer gleichen Welle (49) befestigt sind, die durch einen Motor gesteuert wird, wobei der letztgenannte eine seitliche Bewegung der Gesamtheit der genannten Platten (46) erzeugt, um den Fall der Stange hervorzurufen.

10. Vorrichtung nach Anspruch 3, **dadurch gekennzeichnet, dass** die genannten Mittel (12) zur Befestigung und zur axialen Bewegung eine Spannzange (57) umfassen, die auf einem drehbaren Ansatzstück an einem Ende eines Seils (58) montiert ist, das in der Richtung seiner Achse bewegt wird, so dass es in den Beschickungskanal (8) vordringt und sich sodann zurückbewegt, wobei das Vondringen und die Rückwartsbewegung dieses Seils mit der Steuerung der Automatendrehmaschine koordiniert sind.

11. Vorrichtung nach Anspruch 10, **dadurch gekennzeichnet, dass** die Spannzange (57), die auf dem drehbaren Ansatzstück montiert ist, austauschbar ist, um ihre Anpassung an den Durchmesser der zu ladenden Stangen zu ermöglichen.

12. Vorrichtung nach Anspruch 3, **dadurch gekennzeichnet, dass** die genannten Mittel (63-67) zum Ausstoßen der Stangenenden am Ende der Bearbeitung darin bestehen, dass ein hinterer Teil des Beschickungskanals (8), der länger ist als das längstmögliche Stangenende, so gestaltet ist, dass er um eine Achse kippen kann, die parallel zur Achse des Kanals ist.

13. Vorrichtung nach den Ansprüchen 11 und 12, **dadurch gekennzeichnet, dass** der Beschickungskanal (8) mit einer ergänzenden Zange (57) mit programmierter Steuerung ausgestattet ist, die in der Lage ist, einen innerhalb des Kanals befindlichen Teil der Stange in einer genau zentrierten Position in Bezug auf den Kanal (8) zu fixieren, wobei diese ergänzende Zange (57) dazu dient, den hinteren Teil einer ganzen Stange zum Zeitpunkt des Eingreifens der Spannzange zu fixieren und den hinteren Teil eines Stangenendes am Ende der Bearbeitung zu fixieren, um zu ermöglichen, die Spannzange vor dem Ausstoßen davon abzuziehen.

## Claims

1. A device for supplying a machine tool, in particular an automatic lathe, with bars to be machined, comprising a feed channel aligned on the axis of the machine tool and means for introducing bars into this channel one by one, **characterised in that** the said means comprise
- a fixed container (5) able to contain a stock of bars (13) stacked in bulk in the longitudinal direction, having a straight top longitudinal edge (7),
- a receptacle (16) adjacent to the said top edge of the container and extending above the feed channel (8),
- at least one repetitive-action gripping mechanism (14), disposed so as to grip, in the container, at least a portion of the bar and to pull it into a given position situated above the receptacle,
- at least one alignment mechanism (15) having at least one member (44) which moves in the longitudinal direction and progressively withdraws from the container all the bar gripped by the gripping mechanism, so as to place all the bar in the receptacle, and
- control means which cause the bar to be released and to drop into the bottom of the receptacle and then into the feed channel.

2. A device according to claim 1, **characterised in that** the control means are arranged so as to cause a movement of the receptacle (16) which causes the bar received to fall onto the receptacle and from the latter into the feed channel (8).

3. A device according to one of claims 1 or 2, **characterised in that** it further has means (12, 63-67) of fixing and axial movement, with monitored control, in order to connect each bar (13) introduced into the feed channel (8) to the lathe control members, and then remove and eject, out of the channel, the bar end remaining after machining.

4. A device according to claim 1, **characterised in that** the said top longitudinal edge (7) of the container (5) is the horizontal top edge of a flat plate placed obliquely and forming a lateral wall of the container.

5. A device according to claim 1, **characterised in that** the gripping mechanism (14) includes a rigid frame, able to move perpendicularly to the container (5) in the middle thereof, and controlled so as to effect at least one to and fro movement with respect to the container each time a bar (13) is gripped.

6. A device according to claim 5, **characterised in that** the gripping mechanism (14) includes, mounted in its frame, two parallel end parts (24', 24'') of a jaw (24), a resilient support blade (26) placed between the said end parts of the jaw, and drive means (30) for giving the jaw a hooking on movement co-ordinated with the advance movement of the frame.

7. A device according to claim 6, **characterised in that** the control means are associated with the gripping mechanism (14) and provided with detectors (31) so as to cause a repetition of the gripping movement and alignment movement if, during a first gripping movement, no bar has been hooked between the jaws (24) and the said resilient blade (26).

8. A device according to any one of the preceding claims, **characterised in that** the alignment mechanism (15) includes a pair of carriages (37) guided and supported by a profiled rail (36) disposed above the container (5), each carrying a vertical rod (43) on which a profiled roller slides (44), these rollers being moved vertically on the said rods by a fixed ramp (45) according to the mutual separation of the carriages (37) during their movement so as to effect the alignment of the bar (13).

9. A device according to claim 2, **characterised in that** the said means for causing a bar (13) to fall into the feed channel (8) consist of the fact that the receptacle (16) consists of a series of elongate plates (46) supported and guided in line with each other, fixed to racks (47) in which there mesh pinions (48) fixed to the same shaft (49) controlled by a motor, the latter driving a lateral movement of all the said plates (46) in order to cause the bar to drop.

10. A device according to claim 3, **characterised in that** the said fixing and axial movement means (12) include a bar clamp (57) mounted on a rotary ferrule at one end of a cable (58) driven in the direction of its axis so as to advance and then withdraw in the feed channel (8), the advance and withdrawal of this cable being co-ordinated with the control of the lathe.

11. A device according to claim 10, **characterised in that** the bar clamp (57) mounted on the rotary ferrule is exchangeable in order to enable it to be adapted to the diameter of the bars to be loaded.

12. A device according to claim 3, **characterised in that** the said means (63-67) for ejecting the bar ends at the end of machining consist of the fact that a rear portion of the feed channel (8), with a length greater than the maximum possible bar end, is arranged so as to be able to tilt about an axis parallel to the axis of the channel.

13. A device according to claims 11 and 12, **characterised in that** the feed channel (8) is equipped with an auxiliary clamp (57) with programmed control, capable of fixing, in a position exactly centred with respect to the channel (8), a bar part situated in the channel, this auxiliary clamp (57) serving to fix the rear of a full bar at the time of engagement of the bar clamp and to fix the rear of a bar end at the end of machining in order to make it possible to remove the bar clamp therefrom before ejection.
